# EUROPÄISCHE PATENTSCHRIFT

(11) **EP 0 530 504 B1**
(45) Veröffentlichungstag und Bekanntmachung des Hinweises auf die Patenterteilung: **14.08.1996**
(21) Anmeldenummer: 92113081.1
(22) Anmeldetag: 31.07.1992
(51) Int. Cl.: B28B 7/00, B28B 17/00, B65G 47/90

(54) **Verfahren und Einrichtung zur Herstellung von Betonteilen**
Method and device for making concrete products
Procédé et dispositif pour la fabrication d'éléments en béton

(30) Priorität: 04.09.1991 DE 4129368
(43) Veröffentlichungstag der Anmeldung: 10.03.1993
(73) Patentinhaber: WECKENMANN ANLAGENTECHNIK GmbH, D-72358 Dormettingen (DE)
(72) Erfinder: Weckenmann, Hermann, W-7461 Dormettingen (DE); Weckenmann, Wolfgang, W-7461 Dormettingen (DE)
(74) Vertreter: Möbus, Rudolf, Dipl.-Ing.

(56) Entgegenhaltungen:
- EP-A- 0 071 503
- EP-A- 0 197 844
- DE-A- 2 907 508
- DE-A- 3 325 921
- DE-A- 3 828 645
- DE-C- 4 031 384
- US-A- 3 667 880
- BETONWERK + BFT FERTIGTEIL - TECHNIK Bd. 56, Nr. 2, Februar 1990, WIESBADEN , DE Seiten 31 - 37 , XP115800 R. MORTUSEWICZ 'COMPUTERGESTEUERTE ELEMENTDECKENPRODUKTION DAHMIT - BETONWERK DER ZUKUNFT'
- BETONWERK + BFT FERTIGTEIL - TECHNIK Bd. 58, Nr. 4, April 1992, WIESBADEN , DE Seiten 88 - 96 , XP271229 W. REYMANN 'DAS AUTOMATISCHE BETONWERK WIRKLICHKEIT UND VISION'

## Beschreibung

Die Erfindung betrifft ein Verfahren zum Betrieben einer Einrichtung für die Herstellung von Betonteilen mit den im Oberbegriff des Hauptanspruches aufgeführten Merkmalen und eine Einrichtung zur Durchführung des Verfahrens.

Die bekannten Einrichtungen (siehe z.B. die DE-A-2907508) zur Herstellung von Betonteilen weisen einen Schalungstisch auf, auf welchem die Betonteilränder bildende Schalungselemente in der gewünschten Form lösbar angeordnet werden, insbesondere magnetisch fixierbar sind. Die Leistung dieser Einrichtungen wird als unzureichend empfunden, weil nicht nur die gegossenen Betonteile eine gewisse Abbindezeit benötigen, sondern weil nach der Fertigstellung eines Betonteiles die Schalungselemente zur Freigabe des

Betonteiles wieder entfernt, von Betonresten gesäubert und anschließend für die Herstellung des nächsten Betonteiles wieder neu gesetzt werden müssen.

Der Erfindung liegt die Aufgabe zugrunde, die eingangs erwähnte Verfahren und Einrichtung zur Herstellung von Betonteilen so auszubilden, daß die Vorbereitung der Schalung für die Betonteile beschleunigt durchgeführt werden kann.

Die gestellte Aufgabe, nämlich die Verkürzung der Rüstzeit der Einrichtung, läßt sich optimal lösen, wenn die Einrichtung nach einem Verfahren mit den folgenden aufeinanderfolgenden Verfahrensschritten betrieben wird:
a) Entnahme von Permanentmagnetkörpern aus dem zugeordneten Zwischenspeicher durch den Roboter und ortsgerechtes Absetzen auf dem Schalungstisch an End- oder Übergangsstellen der den Betongußbereich begrenzenden Randstege;
b) Entnahme von Randstegen aus den ihnen zugeordneten Zwischenspeichern durch den Roboter und Absetzen auf den Schalungstisch über jeweils zwei, zusammen die Lage des Randsteges fixierende Permanentmagnete;
c) Überprüfung und gegebenenfalls Korrektur der Lage der Randstege von Hand;
d) nach Einbringen von Armierungsteilen in die gebildete Form Gießen des Betonteiles;
e) während des Gießvorganges und dem anschließenden Ausschalen von Hand Einsatz des Roboters zum Einsortieren von nach dem Ausschalen gereinigter Randstege und von Permanentmagneten in die ihnen zugeordneten Zwischenspeicher.

Die Einrichtung zur Durchführung des Verfahrens ist gekennzeichnet durch die Merkmale des Anspruchs 2. Mit einem solchen Roboter läßt sich nicht nur das Erstellen der Schalung beschleunigen, sondern auch sicherstellen, daß die Schalung nicht falsch zusammengestellt wird. Eine zusätzliche Verkürzung der Rüstzeit läßt sich dadurch erreichen, daß die Einrichtung gesonderte Zuführungen für die Randstege und für die Permanentmagnetkörper erhält, die zu den Speicherstellen für diese Teile führen und über welche diese Teile nach dem Säubern von Betonresten rasch wieder in eine Bereitstellung gebracht werden, wobei ebenfalls der Roboter einsetzbar ist.

Für ein sicheres Erfassen der Randstege durch den Roboter können diese Randstege mit mindestens einer Grifföffnung für die Hand des Roboters versehen sein. Auch können zusätzlich Kodieröffnungen in den Randstegen für einen Sensorbereich der Roboterhand vorgesehen werden, so daß der Roboter überprüfen kann, ob er die richtigen, im Programm vorgegebenen Randstege auch erfaßt. Zweckmäßig kann als Grifföffnung ein Schlitz in der Basis der als U-Profile ausgebildeten Randstege ausgebildet sein.

Der Roboter kann vorteilhafterweise so ausgebildet sein, daß er mit einer einzigen Greifhand sowohl die Randstege als auch die Permanentmagnetkörper, die zur Fixierung der Randstege vorgesehen sind, erfassen und ortsgerecht absetzen kann. Hierzu kann die Greifhand des Roboters zweckmäßig zwei zusammenwirkende, jeweils in entgegengesetzten Richtungen bewegbare Greifbacken aufweisen, die auf ihren sich gegenüberliegenden Seiten dem Außenprofil der zu erfassenden Permanentmagnete angepaßt sind und auf ihren einander abgewandten Seiten ein an die Grifföffnung der Randstege angepaßtes Profil aufweisen. Dabei kann sich das Profil der einander abgewandten Seiten der beiden Greifbacken jeweils vom freien Greifbackenende aus bis zu einer Hinterschnittkante mit einer Schrägfläche erweitern, wodurch das Eintauchen der Greifbacken in die schlitzförmigen Grifföffnungen der Randstege erleichtert wird. Es ist auch steuerungstechnisch von Vorteil, wenn die Greifbacken der Roboterhand für das Erfassen der Permanentmagnetkörper beispielsweise aufeinander zubewegt werden, während zum Erfassen der Randstege beispielsweise ein Aufspreizen der beiden Greifbacken erfolgt.

Nachfolgend wird ein Ausführungsbeispiel eines Schalungsroboters für eine Einrichtung zur Herstellung von Betonteilen anhand der beiliegenden Zeichnung näher erläutert.

Im einzelnen zeigen:
- Fig. 1: eine Draufsicht auf einen von Permanentmagnetkörpern auf einem Schalungstisch lösbar gehaltenen Randsteg als Schalungselement;
- Fig. 2: eine perspektivische Darstellung eines Endes eines Randsteges;
- Fig. 3: eine schematische Darstellung des zum Setzen der Permanentmagnetkörper und Schalungselemente eingesetzten Roboters.

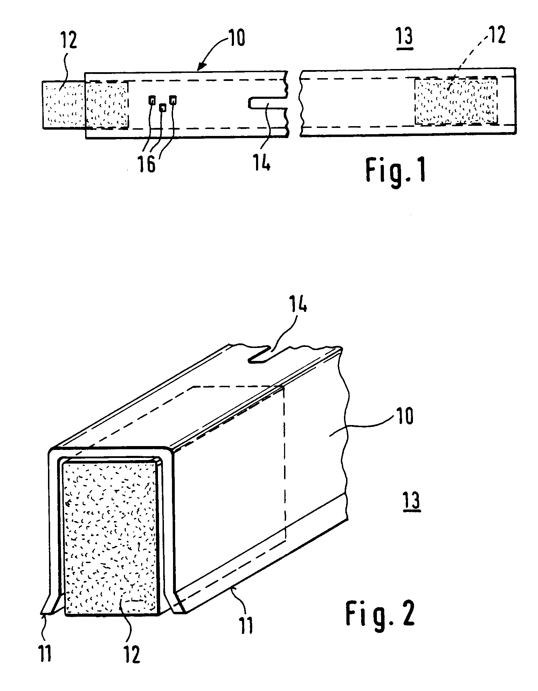

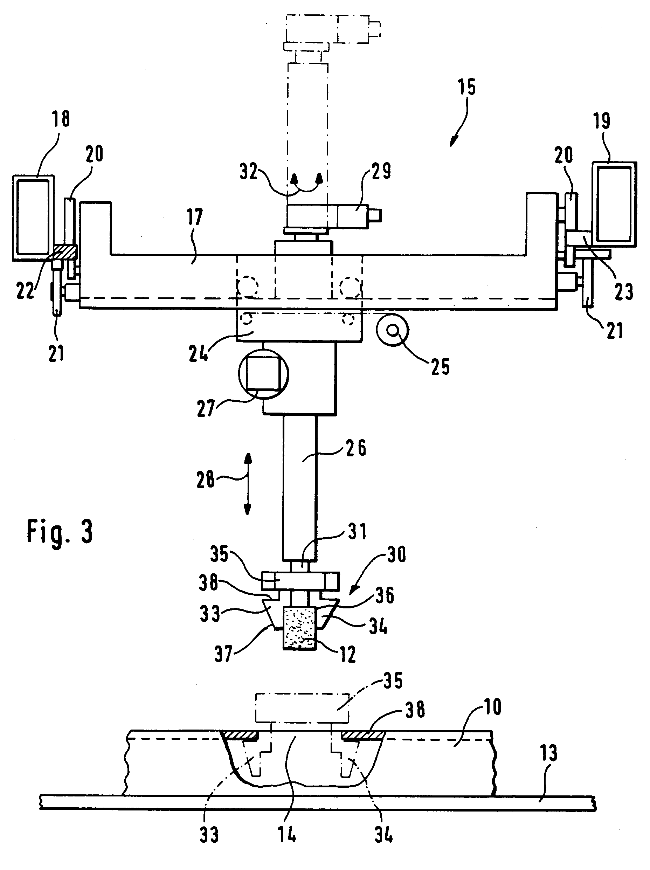

Wie aus den Fig. 1 und 2 ersichtlich ist, weisen die als Schalungselemente für die Ränder von Betonteilen verwendeten Randstege 10 einen U-förmigen Querschnitt auf. Die Randstege 10 liegen mit den leicht auswärts abgewinkelten freien Enden 11 der U-Schenkel auf einem Schalungstisch 13 auf und werden darauf mittels quaderförmiger Permanentmagnetkörper 12 lösbar gehalten, die in das U-Querschnittsprofil der Randstege 10 passen. In ihrem oben liegenden Basisbereich sind die U-förmigen Randstege 10 in ihrer Mitte mit einem Durchgangsschlitz 14 versehen, der eine Grifföffnung für den aus Fig. 3 ersichtlichen Roboter 15 bildet. Die Randstege 10 können zusätzlich Kodieröffnungen 16 aufweisen, die in nicht dargestellter Weise von einem am Roboter ausgebildeten Sensor abgetastet werden können. Durch die Kodieröffnungen kann auch eine Kollisionsüberwachung erfolgen, indem in ergriffenem Zustand ein Licht- oder Schallsignal durch eine Kodieröffnung gelangen und von einem Sensor erfaßt werden kann.

Fig. 3 zeigt schematisch den programmgesteuerten Roboter 15. Er besteht aus einem Tragkörper 17, der sich zwischen zwei Trägern 18, 19 eines über dem Schalungstisch 13 angeordneten Einrichtungsgestelles erstreckt und mittels Laufrollen 20 und 21 jeweils auf einer an diesen Trägern 18 oder 19 befestigten Laufschiene 22 oder 23 verfahrbar gelagert und abgestützt ist. In dem Träger 17 ist ein Wagen 24 mittels eines Antriebsmotors 25 verfahrbar gelagert, in welchem seinerseits ein Roboterarm 26 verstellbar gelagert ist. Der Roboterarm 26 kann mittels eines Getriebemotors 27 in Richtung des eingetragenen Doppelpfeiles 28 höhenverstellt werden. Mittels eines Getriebemotors 29 kann einer Welle 31 des Roboterarmes 26 eine Drehbewegung in Richtung des eingezeichneten Doppelpfeiles 32 erteilt werden.

Auf der Welle 31 des Roboterarmes 26 ist eine Roboterhand 30 in Axialrichtung gegen Federkraft verschiebbar gelagert. Sie besteht aus zwei spiegelbildlich gleichen Greifbacken 33 und 34, die mittels einer nicht näher dargestellten, hydraulisch, pneumatisch oder elektrisch betriebenen Antriebsvorrichtung 35 jeweils gleichzeitig und in entgegengesetzten Richtungen verstellbar sind. Die beiden Greifbacken weisen auf ihren einander zugekehrten Seiten jeweils eine Anschlagstufe 36 auf. Auf ihren voneinander abgewandten Seiten weisen sie eine nach unten einwärts gerichtete Schrägfläche 37 auf, an deren oberes Ende sich ein Hinterschnittbereich 38 anschließt. Wenn die beiden Greifbacken 33 und 34 gegeneinander bewegt werden, können sie zwischen sich einen Permanentmagnetkörper 12 erfassen. Zum Erfassen eines Randsteges 10 werden die beiden Greifbacken 33, 34 der Roboterhand 30 in den Schlitz 14 des Randsteges 10 eingeschoben und anschließend auseinandergespreizt, bis an den Schlitzenden der Rand des Randsteges 10 in den Hinterschnittbereich 38 der Greifbacken 33, 34 gelangt, wie dies mit strichpunktierten Linien in Fig. 3 angedeutet ist. Dadurch wird ein formschlüssiges Erfassen der wesentlich schwereren Randstege 10 erreicht.

Die von der Roboterhand 30 erfaßten Gegenstände werden programmgesteuert an vorgegebenen Stellen des Schalungstisches 13 lagegenau abgesetzt. Beim Aufsetzen der Randstege 10 auf die Permanentmagnetkörper 12 wird die Hand 30 auf freie Drehbarkeit geschaltet, um Flucht- und Positionsfehler ausgleichen zu können. Entnommen werden die Gegenstände, Permanentmagnetkörper 12 oder Randstege 10 aus nicht dargestellten Zwischenspeicherstellen am Rande des Schalungstisches, in welche sie zweckmäßig über gesonderte Zuführungen, wie beispielsweise Transportbänder, eingebracht werden können. Sie können aber auch mittels des Roboters an einer Sammelstelle, wo die Randstege 10 von Betonresten gereinigt werden, aufgenommen und in die Zwischenspeicher einsortiert werden, wozu die Zeit genutzt werden kann, in welcher ein gegossenes Betonteil auf dem Schalungstisch abbindet.

## Patentansprüche

1. Verfahren zum Betreiben einer Einrichtung für die Herstellung eines Betonteiles, gekennzeichnet durch folgende aufeinanderfolgende Verfahrensschritte:
a) Entnahme von Permanentmagnetkörpern (12) aus einem zugeordneten Zwischenspeicher durch einen Roboter (15) und lagegenaues Absetzen auf einem Schalungstisch (13) an End- oder Übergangsstellen der den Betongußbereich begrenzenden Randstege (10);
b) Entnahme von Randstegen (10) aus den ihnen zugeordneten Zwischenspeichern durch den Roboter (15) und Absetzen auf den Schalungstisch (13) jeweils über zwei, zusammen die Lage des Randsteges (10) fixierenden Permanentmagnetkörpern (12);
c) Überprüfung und gegebenenfalls Korrektur der Lage der Randstege (10) von Hand;
d) nach Einbringen von Armierungsteilen in die gebildete Form Gießen des Betonteiles;
e) während des Gießvorganges und dem anschließenden Ausschalen von Hand Einsatz des Roboters (15) zum Einsortieren von nach dem Ausschalen gereinigter Randstege (10) und Permanentmagnetkörper (12) in die ihnen zugeordneten Zwischenspeicher.

2. Einrichtung zur Durchführung des Verfahrens nach Anspruch 1, mit mindestens einem Schalungstisch (13) und darauf anordenbaren und magnetisch fixierbaren, gesonderten Schalungselementen zur Bildung von Fertigteilrändern, dadurch gekennzeichnet, daß ein programmgesteuerter Roboter (15) zur Entnahme von mit unterschiedlichen Normlängen ausgebildeten, als Schalungselemente eingesetzten Randstegen (10) und von gesonderten Permanentmagnetkörpern (12) aus gesonderten Speicherstellen und zum Aufbringen auf den Schalungstisch (13) vorgesehen ist, daß die Einrichtung gesonderte Transport-Vorrichtungen für die Randstege (10) und für die Permanentmagnetkörper (12) aufweist, die zu den Speicherstellen für diese Teile führen, und daß die Einrichtung als Schalungselemente eingesetzte Randstege (10) aufweist, welche ein derartiges Profil haben, z.B. ein U-förmiges Profil, daß die Randstege (10) jeweils über mindestens einen Permanentmagnetkörper (12) auf den Schalungstisch (13) abgesetzt werden können.

3. Einrichtung nach Anspruch 2, dadurch gekennzeichnet, daß die Randstege (10) mindestens eine Grifföffnung (14) für die Hand (30) des Roboters (15) aufweisen.

4. Einrichtung nach Anspruch 3, dadurch gekennzeichnet, daß die Randstege (10) zusätzliche Kodieröffnungen (16) für einen Sensorbereich der Hand (30) des Roboters (15) aufweisen.

5. Einrichtung nach Anspruch 3, dadurch gekennzeichnet, daß die Grifföffnung ein Schlitz (14) in der Basis der ein U-Profil aufweisenden Randstege (10) ist.

6. Einrichtung nach einem der Ansprüche 2 bis 5, dadurch gekennzeichnet, daß die Greifhand (30) des Roboters (15) zwei zusammenwirkende, jeweils in entgegengesetzten Richtungen bewegbare Greifbacken (33, 34) aufweist, die auf ihren sich gegenüberliegenden Seiten dem Außenprofil der zu erfassenden Permanentmagnetkörper (12) angepaßt sind und auf ihren einander abgewandten Seiten ein an die Grifföfffnung (14) der Randstege (10) angepaßtes Profil aufweisen.

7. Einrichtung nach Anspruch 6, dadurch gekennzeichnet, daß das Profil der einander abgewandten Seiten der beiden Greifbacken (33, 34) sich jeweils vom freien Greifbackenende aus bis zu einem Hinterschnittbereich (38) mit einer Schrägfläche (37) erweitert.

## Claims

1. Method of operating an apparatus for manufacturing a concrete part, **characterized by** the following successive process stages:
a) picking up permanent magnet elements (12) from an associated intermediate store by a robot (15) and precisely positioned dropping off on a casing table (13) at end or transitional points of edge webs (10) which define the concrete casting area;
b) picking up edge webs (10) from their associated intermediate stores by a robot (15) and dropping them off on the casing table (13) above two respective permanent magnet elements (12) which jointly fix the position of the edge web (10);
c) checking and, if appropriate, correcting the position of the edge webs (10) by hand;
d) after insertion of reinforcing elements into an established mould: casting the concrete part ;
e) during the casting process and subsequent decasing by hand: use of the robot (15) for sorting edge webs (10), which have been cleaned after decasing, and permanent magnet elements (12) into their associated intermediate stores.

2. Apparatus for carrying out the process according to Claim 1, comprising at least one casing table (13) and thereon arrangeable and magnetically fixable separate casing elements for forming edges of finished parts, **characterized in that** a program-controlled robot (15) is provided for picking up edge webs (10), which are of different normed lengths and used as casing elements, and separate permanent magnet elements (12) from separate storage points and for delivery to the casing table (13), and that the apparatus comprises separate transport devices for the edge webs (10) and for the permanent magnet elements (12) which connect to the storage points of these parts, and that the apparatus comprises edge webs (10) used as casing elements, the profile of which, for example U-shaped, as casing elements which have a profile, for example U-shaped, and that the edge webs (10) can be dropped at least onto one permanent magnet element (12) on the casing table (13).

3. Apparatus according to Claim 2, **characterized in that** the edge webs (10) comprise at least one grab aperture (14) for the hand (30) of the robot (15).

4. Apparatus according to Claim 3, **characterized in that** the edge webs (10) comprise additional encoding apertures (16) for a sensor area of the hand (30) of the robot (15).

5. Apparatus according to Claim 3, **characterized in that** the grab aperture is a slot (14) in the base of the U-shaped edge webs (10).

6. Apparatus according to one of Claims 2 to 5, **characterized in that** the grab hand (30) of the robot (15) comprises two cooperating grab jaws (33, 34), which are movable in respectively opposing directions and at their opposing sides matched to the outside profile of the permanent magnet elements (12) to be picked up and comprise on their sides facing away from each other a profile to match the grab aperture (14) of the edge webs (10).

7. Apparatus according to Claim 6, **characterized in that** the profile of the sides facing away from each other of both grab jaws (33, 34) widens from a respective free grab-jaw end up to an undercut area (38) with a slanted surface (37).

## Revendications

1. Procédé pour faire fonctionner un dispositif pour la fabrication d'un élément en béton, caractérisé par les étapes de procédé successives suivantes :
a) prélèvement de corps à aimantation permanente (12), dans une réserve intermédiaire associée, par un robot (15) et positionnement précis sur une table de coffrage (13) en des points d'extrémité ou de jonction des barres de bordure (10) délimitant la zone de coulée du béton ;
b) prélèvement de barres de bordure (10), dans les réserves intermédiaires qui leur sont associées, par le robot (15) et positionnement de chacune d'elles sur la table de coffrage (13) par-dessus deux corps à aimantation permanente (12) définissant ensemble la position de la barre de bordure (10) ;
c) contrôle et, le cas échéant, correction manuelle de la position des barres de bordure (10) ;
d) après la mise en place d'éléments d'armature dans le moule formé, coulée de l'élément en béton ;
e) au cours de l'opération de coulée et du décoffrage manuel ultérieur, utilisation du robot (15) pour ranger les barres de bordure (10) et les corps à aimantation permanente (12) nettoyés après le décoffrage dans les réserves intermédiaires qui leur sont associées.

2. Dispositif pour la réalisation du procédé selon la revendication 1, avec au moins une table de coffrage (13) et des éléments de coffrage séparés pouvant être disposés dessus et pouvant être immobilisés magnétiquement pour former des bords d'éléments finis, caractérisé en ce qu'un robot programmable (15) est prévu pour prélever des barres de bordure (10) présentant diverses longueurs normalisées, servant d'éléments de coffrage, et des corps séparés à aimantation permanente (12) dans des réserves séparées et pour les déposer sur la table de coffrage (13), en ce que le dispositif comporte des dispositifs de transport séparés pour les barres de bordure (10) et pour les corps à aimantation permanente (12), qui mènent aux réserves de ces éléments, et en ce que le dispositif comporte des barres de bordure (10) servant d'éléments de coffrage qui présentent un profil tel, par exemple un profil en forme de U, que les barres de bordure (10) peuvent chacune être déposées par-dessus au moins un corps à aimantation permanente (12) sur la table de coffrage (13).

3. Dispositif selon la revendication 2, caractérisé en ce que les barres de bordure (10) comportent au moins un orifice de préhension (14) pour la main (30) du robot (15).

4. Dispositif selon la revendication 3, caractérisé en ce que les barres de bordure (10) comportent des orifices supplémentaires de codage (16) pour une zone de détection de la main (30) du robot (15).

5. Dispositif selon la revendication 3, caractérisé en ce que l'orifice de préhension est une fente (14) dans la base des barres de bordure (10) présentant un profil en U.

6. Dispositif selon l'une des revendications 2 à 5, caractérisé en ce que la main de préhension (30) du robot (15) comporte deux mâchoires de préhension coopérant ensemble (33, 34), pouvant se déplacer suivant des directions opposées, qui sont adaptées par leurs faces en vis-à-vis au profil extérieur des corps à aimantation permanente (12) à saisir et présentent sur leurs faces opposées un profil adapté à l'ouverture de préhension (14) des barres de bordure (10).

7. Dispositif selon la revendication 6, caractérisé en ce que le profit des faces opposées des deux mâchoires de préhension (33, 34) s'élargit à partir de l'extrémité libre de chaque mâchoire jusqu'à une zone en décrochement (38) avec une surface inclinée (37).
